# EUROPEAN PATENT APPLICATION

(11) **EP 3 199 075 A1**
(43) Date of publication of application: **02.08.2017**
(21) Application number: 17151550.5
(22) Date of filing: 16.01.2017
(51) Int. Cl.: A47J 37/04, A47J 37/06

(54) **GRILLING AND TOASTING APPARATUS THAT FACILITATES EASY TURNING OF FOOD AND GRILL PLATE THEREOF**

(30) Priority: 29.01.2016 CN 201610064018
(71) Applicant: Tsann Kuen (Zhangzhou) Enterprise Co., Ltd., Fujian 363107 (CN)
(72) Inventor: CHANG, Wenyu, Zhangzhou, Fujian 363107 (CN); CHEN, Yucheng, Zhangzhou, Fujian 363107 (CN)
(74) Representative: Patentship Patentanwaltsgesellschaft mbH

(57) **Abstract**

A grilling and toasting apparatus includes a base (1) and a grill plate (2) rotatably mounted on the base (2). The grill plate (2) has a first grilling surface (215) and a second grilling surface (225) located in different planes and cooperating with each other to define a substantially V-shaped included angle (A) . The grill plate (2) is configured to rotate between a first grilling position, in which the first grilling surface (215) supports the food (900), and a second grilling position, in which the second grilling surface (225) supports the food (900).

## Description

The disclosure relates to a cooking apparatus, more particularly to a grilling and toasting apparatus that can facilitate easy turning of food and a grill plate thereof.

There are many kinds of grilling and toasting apparatus for grilling and toasting food in the market nowadays. A conventional grilling and toasting apparatus usually has a grill plate. In use, food is placed on the grill plate, and the grill plate is heated to cook the food. Since only one side of the food is directly heated by the grill plate, it is necessary to turn the other side of the food using a food clamping device, chopsticks or the like so as to be heated by the grill plate, so that the food can be uniformly heated. However, to use an extra tool for turning the food is not only laborious, but also is inconvenient during cooking. Hence, the conventional grilling and toasting apparatus still has room for improvement.

Therefore, an object of the present disclosure is to provide a grilling and toasting apparatus that can facilitate turning of food without much effort.

Another object of this disclosure is to provide a grill plate that can facilitate turning of food without much effort.

According to one aspect of this disclosure, a grill plate for cooking food comprises a first grilling surface and a second grilling surface located in different planes and cooperating with each other to define a substantially V-shaped included angle. The grill plate is configured to rotate between a first grilling position, in which the first grilling surface supports the food, and a second grilling position, in which the second grilling surface supports the food.

According to another aspect of this disclosure, a grilling and toasting apparatus for cooking food comprises a base and a grill plate rotatably mounted on the base. The grill plate has a first grilling surface and a second grilling surface located in different planes and cooperating with each other to define a substantially V-shaped included angle. The grill plate is configured to rotate between a first grilling position, in which the first grilling surface supports the food, and a second grilling position, in which the second grilling surface supports the food.

Other features and advantages of the disclosure will become apparent in the following detailed description of the embodiment with reference to the accompanying drawings, of which:
Fig. 1 is an exploded perspective view of a grilling and toasting apparatus according to the embodiment of the present disclosure;
Fig. 2 is a partly exploded perspective view of a grill plate of the embodiment;
Fig. 3 is an assembled perspective view of the embodiment, illustrating the grill plate in a first grilling position;
Fig. 4 is a side view of Fig. 3;
Fig. 5 is a view similar to Fig. 4, but illustrating the grill plate in a second grilling position; and
Fig. 6 is a view similar to Fig. 4, but illustrating the grill plate being disposed between the first and second grilling positions.

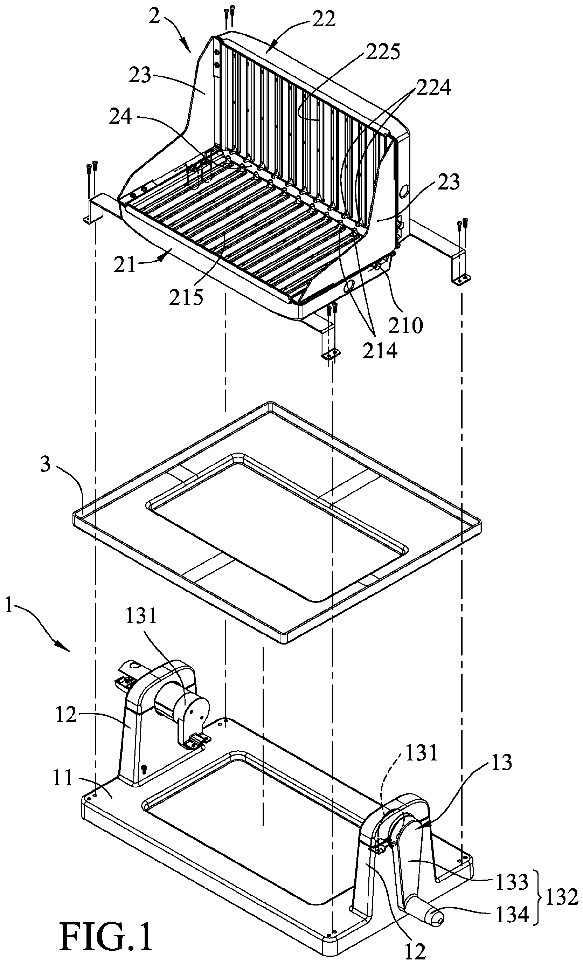

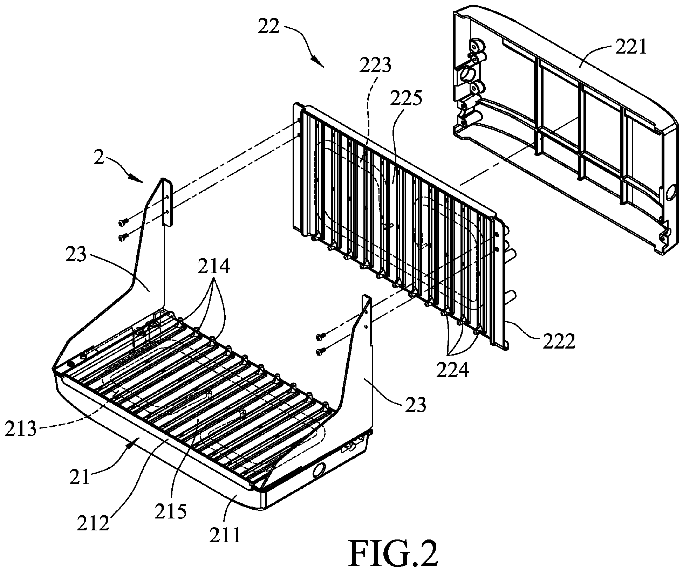

Referring to Figs. 1 to 3, a grilling and toasting apparatus according to the embodiment of the present disclosure is suitable for grilling and toasting food 900, and includes a base 1 , a grill plate 2 and a liquid holding tray 3.

The base 1 includes a base body 11, two spaced-apart support frames 12 extending upwardly and respectively from two opposite sides of the base body 11, and a drive module 13 mounted on the support frames 12. In this embodiment, the base body 11 and the support frames 12 are integrally connected as one piece. Alternatively, the base body 11 and the support frames 12 may be made separately and then assembled to each other. The connection of the base body 11 and the support frames 12 is not limited to what is disclosed herein.

The drive module 13 includes two pivot members 131 disposed respectively and rotatably on the support frames 12 and cooperating with each other to define an axis of rotation (L), and a handle 132 mounted on one of the pivot members 131. The handle 132 has a pivot connecting portion 133 connected to and extending from the one of the pivot members 131 in a direction transverse to the axis of rotation (L), and an operating portion 134 rotatably connected to the pivot connecting portion 133 and opposite to the one of the pivot members 131. Through this, a user can rotate the handle 132 through the operating portion 134.

The grill plate 2 is rotatably mounted on the base 1, and includes a first grill module 21, a second grill module 22, two spaced-apart substantially L-shaped mounting brackets 23 connected to and disposed between the first and second grill modules 21, 22, and a liquid discharge slit 24 between inner ends of the first and second grill modules 21, 22. When viewed from the direction of the axis of rotation (L), the first and second grill modules 21, 22 cooperate with each other to form a V-shape structure. Each of the first and second grill modules 21, 22 includes a casing body 211, 221, a plate body 212, 222 connected to the casing body 211, 221, a heating tube 213, 223 disposed between the casing body 211, 221 and the plate body 212, 222 for heating the plate body 212, 222, and a plurality of stop members 214, 224 provided on the plate body 212, 222.

In this embodiment, the casing body 211 of the first grill module 21 is connected to the pivot members 131, and is provided with two mounting holes 210 for engagement with the pivot members 131, respectively. Through this, the grill plate 2 is supported by the support frames 12 through the pivot members 131 in a suspended state, and can be driven by the pivot members 131 to rotate about the axis of rotation (L). However, in actual practice, the mounting brackets 23 may be used to connect with the pivot members 131 or the casing bodies 211, 221 of the first and second grill modules 21, 22 may be simultaneously connected to the pivot members 131, the grill plate 2 may be similarly driven by the pivot members 131 to rotate. Hence, what is disclosed herein should not be imposed as an implementation limitation.

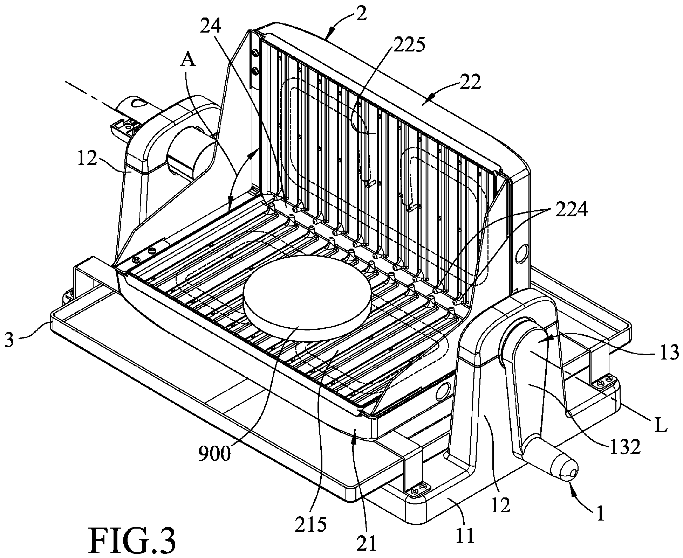

The plate body 212 of the first grill module 21 has a first grilling surface 215, while the plate body 212 of the second grill module 22 has a second grilling surface 225. The first and second grilling surfaces 215, 225 are located in different planes, but when viewed from the direction of the axis of rotation (L), they cooperate with each other to define a substantially V-shaped included angle (A) (see Fig. 3).

The stop members 214, 224 of the first and second grill modules 21, 22 are located on two opposite sides of the liquid discharge slit 24. The stop members 214, 224 of each of the first and second grill modules 21, 22 are located on the inner end of the plate body 212, 222, and are spaced apart from each other along the length of the plate body 212, 222 for blocking the food 900 and preventing the same from sliding into the liquid discharge slit 24.

The liquid holding tray 3 is detachably disposed on the base 1 below the liquid discharge slit 24 for receiving and holding the liquid flowing down from the first and second grilling surfaces 215, 225 via the liquid discharge slit 24. Because the liquid holding tray 3 is detachable, the liquid contained in the liquid holding tray 3 can be removed and discarded. Hence, the grilling and toasting apparatus of the disclosure is very convenient to use and is user-friendly.

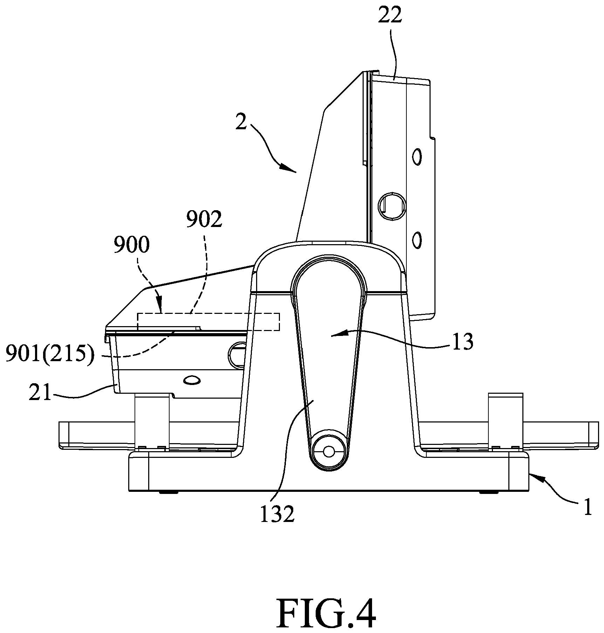

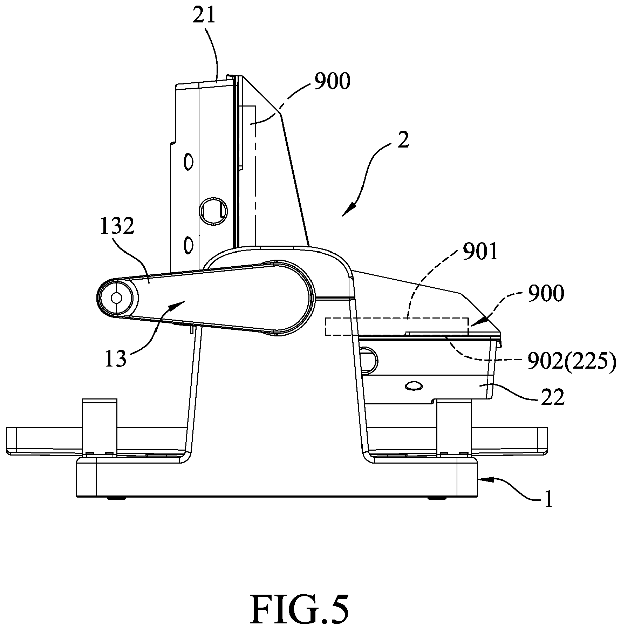

To use the grilling and toasting apparatus of this disclosure for grilling the food 900, for example, a slice of meat, the first and second grill modules 21, 22 are first activated so that the heating tubes 213, 223 thereof can heat the plate bodies 212, 222, after which the handle 132 is rotated to move the grill plate 2 between a first grilling position, as shown in Fig. 4, and a second grilling position, as shown in Fig. 5. In the first grilling position, the first grilling surface 215 is disposed in a horizontal position, and the food 900 to be grilled is placed on the first grilling surface 215 with a first side 901 thereof abutting against the first grilling surface 215 so as to be heated.

After the first side 901 of the food 900 is grilled for a certain period of time, if the user intends to turn the food 900, the handle 132 is rotated clockwise to move upward the first grill module 21 and to move downward the second grill module 22 to a horizontal position. Simultaneously, the food 900 that moves along with the first grilling module 21 is erected and then loses its balance to fall down onto the second grilling surface 225 by gravity. Thus, the food 900 is turned from the first grilling surface 215 to the second grilling surface 225, and the grill plate 2 is shifted from the first grilling position to the second grilling position, in which a second side 902 of the food 900 abuts against the second grilling surface 225 so as to be heated.

If the user intends to turn the food 900 again, the handle 132 is rotated counterclockwise so as to rotate the grill plate 2 back to the first grilling position, and the food 900 is transferred from the second grilling surface 225 to the first grilling surface 215, so that the first side 901 of the food 900 abut against the first grilling surface 215 and be heated again. By repeating the aforesaid steps for several times, the food 900 can be grilled and cooked uniformly.

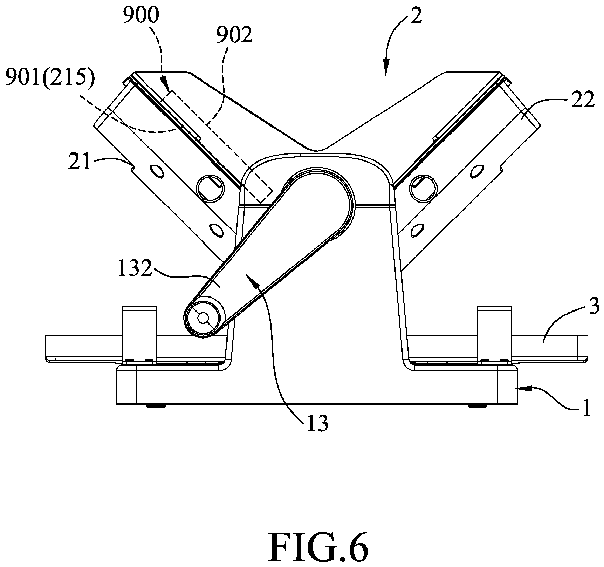

When the grill plate 2 is rotated from the first grilling position to the second grilling position or vice versa, the first and second grill modules 21, 22 can be disposed at inclined states, as shown in Fig. 6. Such a design permits the liquid, such as oil, juice, etc., on the first and second grilling surfaces 215, 225 of the first and second grill modules 21, 22 to flow down by gravity into the liquid holding tray 3 via the liquid discharge slit 24, thereby preventing the liquid to penetrate and adversely affect the taste of the food 900. Hence, the quality of the food 900 can be enhanced.

Moreover, the food 900 may also be grilled during the inclined states of the first and second grill modules 21, 22 by placing the food 900 either on the first grilling surface 215 or the second grilling surface 225. Thus, use of the grilling and toasting apparatus of this disclosure is not limited to what is disclosed herein, and the grilling and toasting apparatus of this disclosure can be operated according to the requirement of the user.

It is worth to mention herein that, during turning of the food 900 on the grill plate 2, the food 900 not only is prevented by the stop members 214 to slide down into the liquid discharge slit 24, but also, as it abuts against the stop members 214 with the stop members 214 serving as a fulcrum, a turning torque is generated about the axis of rotation (L), so that the food 900 can be easily turned.

Additionally, the V-shaped included angle (A) in this embodiment is 90 degrees. When the grill plate 2 is located in the first grilling position, the first grilling surface 215 is horizontal, while the second grilling surface 225 is upright. On the other hand, when the grill plate 2 is located in the second grilling position, the second grilling surface 225 is horizontal, while the first grilling surface 215 is upright. As such, when the grill plate 2 is moved from the first grilling position to the second grilling position, the food 900 is in an unbalanced state and can move away from the first grilling surface 215 to fall down toward the second grilling surface 225. In the same token, when the grill plate 2 is moved from the second grilling position to the first grilling position, the food 900 is in an unbalanced state and can move away from the second grilling surface 225 to fall down toward the first grilling surface 215. However, in actual practice, the V-shaped included angle (A) may range from 30 to 120 degrees, preferably between 60 to 90 degrees, and is not limited to what is disclosed herein. As long as the food 900 can be turned, any angle is acceptable.

With reference to Figs. 1 to 3, it should be noted herein that, in this embodiment, the plate bodies 212, 222 of the first and second grill modules 21, 22 are two separate bodies. However, in actual practice, the plate bodies 212, 222 of the first and second grill modules 21, 22 may be integrally formed as one piece. In this case, the first and second grilling surfaces 215, 225 are located in the different planes, and the liquid discharge slit 24 is located between the first and second grilling surfaces 215, 225.

In sum, through the V-shaped included angle (A) defined between the first and second grilling surfaces 215, 225, the handle 132 of the grilling and toasting apparatus of this disclosure can be simply rotated by the user to drive rotation of the grill plate 2 so as to turn the food 900 and permit the first side 901 and the second side 902 of the food 900 to alternately abut against and be heated by the first and second grilling surfaces 215, 225, respectively. As such, the food 900 can be grilled and cooked uniformly. Furthermore, the grilling and toasting apparatus of this disclosure does not need a food clamping device or chopsticks for turning the food 900, so that effort can be saved. Therefore, the object of this disclosure can be achieved.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, Fig., or description thereof for the purpose of streamlining the disclosure and aiding in the understanding of various inventive aspects.

## Claims

1. A grill plate (2) for cooking food (900), **characterized by**:
a first grilling surface (215) and a second grilling surface (225) located in different planes and cooperating with each other to define a substantially V-shaped included angle (A), said grill plate (2) being configured to rotate between a first grilling position, in which said first grilling surface (215) supports the food (900), and a second grilling position, in which said second grilling surface (225) supports the food (900).

2. The grill plate (2) as claimed in Claim 1, wherein said grill plate (2) includes a liquid discharge slit (24) between said first and second grilling surfaces (215, 225) for liquid on said first and second grilling surfaces (215, 225) to flow therethrough.

3. The grill plate (2) as claimed in Claim 1, wherein said grill plate (2) includes a first grill module (21) having said first grilling surface (215), a second grill module (22) having said second grilling surface (225), and a liquid discharge slit (24) between said first and second grill modules (21, 22), said liquid discharge slit (24) being configured to permit liquid on said first and second grilling surfaces (215, 225) to flow therethrough.

4. The grill plate (2) as claimed in Claim 3, wherein each of said first and second grill modules (21, 22) includes a plate body (212, 222), and a heating tube (213, 223) for heating said plate body (212, 222), said plate body (212) of said first grill module (21) having said first grilling surface (215), said plate body (222) of said second grill module (22) having said second grilling surface (225).

5. The grill plate (2) as claimed in Claim 4, wherein each of said first and second grill modules (21, 22) further includes a plurality of stop members (214, 224) spaced apart from each other along the length of said plate body (212, 222), said stop members (214, 224) of said first and second grill modules (21, 22) being disposed on two opposite sides of said liquid discharge slit (24).

6. The grill plate (2) as claimed in Claim 3, wherein said grill plate (2) further includes two spaced-apart mounting brackets (23) connected to and disposed between said first and second grill modules (21, 22).

7. A grilling and toasting apparatus for cooking food (900) comprising a base (1) and a grill plate (2), **characterized by**:
said grill plate (2) is rotatably mounted on said base (1) and has a first grilling surface (215) and a second grilling surface (225) located in different planes and cooperating with each other to define a substantially V-shaped included angle (A), said grill plate (2) being configured to rotate between a first grilling position, in which said first grilling surface (215) supports the food (900), and a second grilling position, in which said second grilling surface (225) supports the food (900).

8. The grilling and toasting apparatus as claimed in Claim 7, wherein said grill plate (2) includes a liquid discharge slit (24) between said first and second grilling surfaces (215, 225) for liquid on said first and second grilling surfaces (215, 225) to flow therethrough.

9. The grilling and toasting apparatus as claimed in Claim 7, wherein said grill plate (2) includes a first grill module (21) having said first grilling surface (215), a second grill module (22) having said second grilling surface (225), and a liquid discharge slit (24) between said first and second grill modules (21, 22), said liquid discharge slit (24) being configured to permit liquid on said first and second grilling surfaces (215, 225) to flow therethrough.

10. The grilling and toasting apparatus as claimed in Claim 9, wherein each of said first and second grill modules (21, 22) includes a plate body (212, 222), and a heating tube (213, 223) for heating said plate body (212, 222), said plate body (212) of said first grill module (21) having said first grilling surface (215), said plate body (225) of said second grill module (22) having said second grilling surface (225) .

11. The grilling and toasting apparatus as claimed in Claim 10, wherein each of said first and second grill modules (21, 22) further includes a plurality of stop members (214, 224) spaced apart from each other along the length of said plate body (212, 222), said stop members (214, 224) of said first and second grill modules (21, 22) being disposed on two opposite sides of said liquid discharge slit (24).

12. The grilling and toasting apparatus as claimed in Claim 9, wherein said grill plate (2) further includes two spaced-apart mounting brackets (23) connected to and disposed between said first and second grill modules (21, 22).

13. The grilling and toasting apparatus as claimed in Claim 7, wherein said base (1) includes a base body (11), two spaced-apart support frames (12) extending upwardly and respectively from two opposite sides of said base body (11) and cooperating with each other to support said grill plate (2), and a drive module (13) mounted on said support frames (12) for driving rotation of said grill plate (2).

14. The grilling and toasting apparatus as claimed in Claim 13, wherein said drive module (13) includes two pivot members (131) disposed respectively and rotatably on said support frames (12) and cooperating with each other to define an axis of rotation (L), and a handle (132) operable to drive rotation of said one of said pivot members (131), said grill plate (2) being connected between said pivot members (131).

15. The grilling and toasting apparatus as claimed in Claim 7, further comprising a liquid holding tray (3) disposed below said grill plate (2).
